# EUROPÄISCHE PATENTSCHRIFT

(11) **EP 3 442 193 B1**
(45) Veröffentlichungstag und Bekanntmachung des Hinweises auf die Patenterteilung: **06.05.2020**
(21) Anmeldenummer: 17185562.0
(22) Anmeldetag: 09.08.2017
(51) Int. Cl.: H04L 29/06

(54) **VERFAHREN ZUM AUFBAU EINES SICHEREN KOMMUNIKATIONSKANALS ZWISCHEN EINER ERSTEN UND EINER ZWEITEN NETZWERKEINRICHTUNG**
METHOD FOR ESTABLISHING A SECURE COMMUNICATION CHANNEL BETWEEN A FIRST AND A SECOND NETWORK DEVICE
PROCÉDÉ D'ÉTABLISSEMENT D'UN CANAL DE COMMUNICATION ENTRE UN PREMIER ET UN SECOND DISPOSITIF SERVEUR

(43) Veröffentlichungstag der Anmeldung: 13.02.2019
(73) Patentinhaber: Siemens Mobility GmbH, 81739 München (DE)
(72) Erfinder: Falk, Rainer, 85586 Poing (DE); Fries, Steffen, 85598 Baldham (DE)

(56) Entgegenhaltungen:
- EP-A2- 1 501 256
- US-A1- 2013 227 272
- US-A1- 2014 256 286

## Beschreibung

Die vorliegende Erfindung betrifft ein Verfahren zum Aufbau eines sicheren Kommunikationskanals zum Austausch von Daten zwischen einer ersten und einer zweiten Netzwerkeinrichtung über ein sicheres Protokoll.

Damit Daten sicher zwischen einer ersten und einer zweiten Netzwerkeinrichtung, wie z.B. Internet der Dinge (IdD) Geräte, ausgetauscht werden können, kann es notwendig sein, einen sicheren Kommunikationskanal zwischen der ersten und der zweiten Netzwerkeinrichtung einzurichten, wobei der sichere Kommunikationskanal über ein sicheres Protokoll definiert sein kann. Die Netzwerkeinrichtungen können hierzu Protokollfestlegungsdaten bzw. Protokolloptionen umfassen, die für die Netzwerkeinrichtung zulässige Protokolle festlegen.

Häufig werden die Protokollfestlegungsdaten bereits bei der Herstellung der Netzwerkeinrichtung festgelegt. Die schnelle Entwicklung von Protokollen, insbesondere Sicherheitsprotokollen, erfordert jedoch eine Aktualisierung der Protokollfestlegungsdaten in den Netzwerkeinrichtungen.

Das Dokument US 2014/256286 A1 offenbart ein Verfahren zur intelligenten Protokollauswahl, um sichere Netzwerkverbindungen zwischen einem mobilen Gerät und einer sicheren Ressource an bekannten Standorten effizienter aufzubauen.

Das Dokument US 2013/227272 A1 offenbart eine Technik, die einer Clienteinrichtung ermöglicht, eine Information darüber zu speichern, ob mehrere Hosteinrichtungen ein bestimmtes Sicherheitsprotokoll unterstützten.

Das Dokument EP 1 501 256 A2 offenbart ferner eine Protokollaushandlungsvorrichtung, die einem außerhalb eines sicheren Bereichs liegenden Computer oder anderen Knoten ermöglicht, mit einem Server oder einem anderen Knoten innerhalb des sicheren Bereichs ein Sicherheitsprotokoll auszuhandeln.

Vor diesem Hintergrund besteht eine Aufgabe der vorliegenden Erfindung darin, ein verbessertes Verfahren zum Aufbau eines sicheren Kommunikationskanals zum Austausch von Daten zwischen einer ersten und zweiten Netzwerkeinrichtung über ein sicheres Protokoll zu schaffen.

Demgemäß wird ein Verfahren zum Aufbau eines sicheren Kommunikationskanals zum Austausch von Daten zwischen einer ersten und zweiten Netzwerkeinrichtung über ein sicheres Protokoll vorgeschlagen nach dem unabhängigen Anspruch 1.

Weitere Ausgestaltungen und Aspekte sind Gegenstand der Unteransprüche.
Fig. 1 zeigt ein erstes Beispiel eines Netzwerks;
Fig. 2 zeigt ein Verfahren zum Aufbau eines sicheren Kommunikationskanals zwischen einer ersten und zweiten Netzwerkeinrichtung gemäß einer ersten Ausführungsform;
Fig. 3 zeigt ein Verfahren zum Aufbau eines sicheren Kommunikationskanals zwischen einer ersten und zweiten Netzwerkeinrichtung gemäß einer zweiten Ausführungsform; und Fig. 4 zeigt ein zweites Beispiel eines Netzwerks.

In den Figuren sind gleiche oder funktionsgleiche Elemente mit denselben Bezugszeichen versehen worden, sofern nichts anderes angegeben ist.

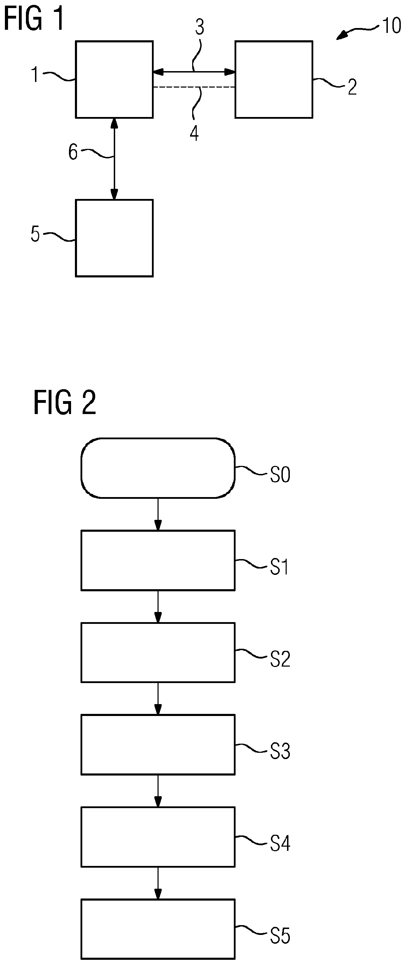

Die Fig. 1 zeigt ein erstes Beispiel eines Netzwerks 10. Das Netzwerk 10 umfasst eine erste Netzwerkeinrichtung 1, eine zweite Netzwerkeinrichtung 2 und eine Ausstellereinrichtung 5.

Die erste Netzwerkeinrichtung 1 ist ein Client, der auf die zweite Netzwerkeinrichtung 2 zugreift, wobei die zweite Netzwerkeinrichtung 2 ein Server ist.

Zur sicheren Datenübertragung zwischen dem Client 1 und dem Server 2 wird zwischen diesen ein Kommunikationskanal 3 aufgebaut. Der Aufbau des Kommunikationskanals 3 erfolgt anhand des in der Fig. 2 beschriebenen Verfahrens.

Im Folgenden wird anhand der Fig. 1 und 2 beschrieben, wie gemäß einer ersten Ausführungsform der sichere Kommunikationskanal zwischen der ersten und der zweiten Netzwerkeinrichtung aufgebaut wird.

In einem Vorbereitungsschritt S0 werden der Client 1, der Server 2 und die Ausstellereinrichtung 5 bereitgestellt.

In einem Schritt S1 werden Sicherheitsdaten durch die Ausstellereinrichtung 5 erzeugt. Die Austellereinrichtung 5 erzeugt die Sicherheitsdaten als ein JSON Web Token. Die erzeugten Sicherheitsdaten erhalten Protokollfestlegungsdaten für den Server 2. Die Protokollfestlegungsdaten legen unter anderem fest, dass ein sicheres Protokoll 4 zwischen dem Client 1 und dem Server 2 in der TLS-Version TLS1.2 vorliegen muss. Zum Schutz der Sicherheitsdaten werden diese durch die Ausstellereinrichtung 5 mit einer digitalen Signatur signiert.

In einem Schritt S2 übermittelt die Ausstellereinrichtung 5 die erzeugten Sicherheitsdaten an den Client 1 über ein Netzwerk 6. Der Client 1 sendet die Sicherheitsdaten in einem Schritt S3 weiter an den Server 2.

Die Übermittlung der Sicherheitsdaten von dem Client 1 an den Server 2 erfolgt in einem TLS-Handshake. Der TLS-Handshake erlaubt dem Server 2 ferner, sich beim Client 1 zu authentisieren. Damit die Sicherheitsdaten während des TLS-Handshakes an den Server 2 übermittelt werden können, müssen ein übliches TLS-Protokoll und ein übliches TLS-Handshake-Protokoll erweitert werden.

Eine Erweiterung eines TLS-Protokoll nach RFC 6066 für die Übertragung der Sicherheitsdaten, kann zur Implementierung in verbreiteten Programmiersprachen wie C oder C++ folgende Definition umfassen:

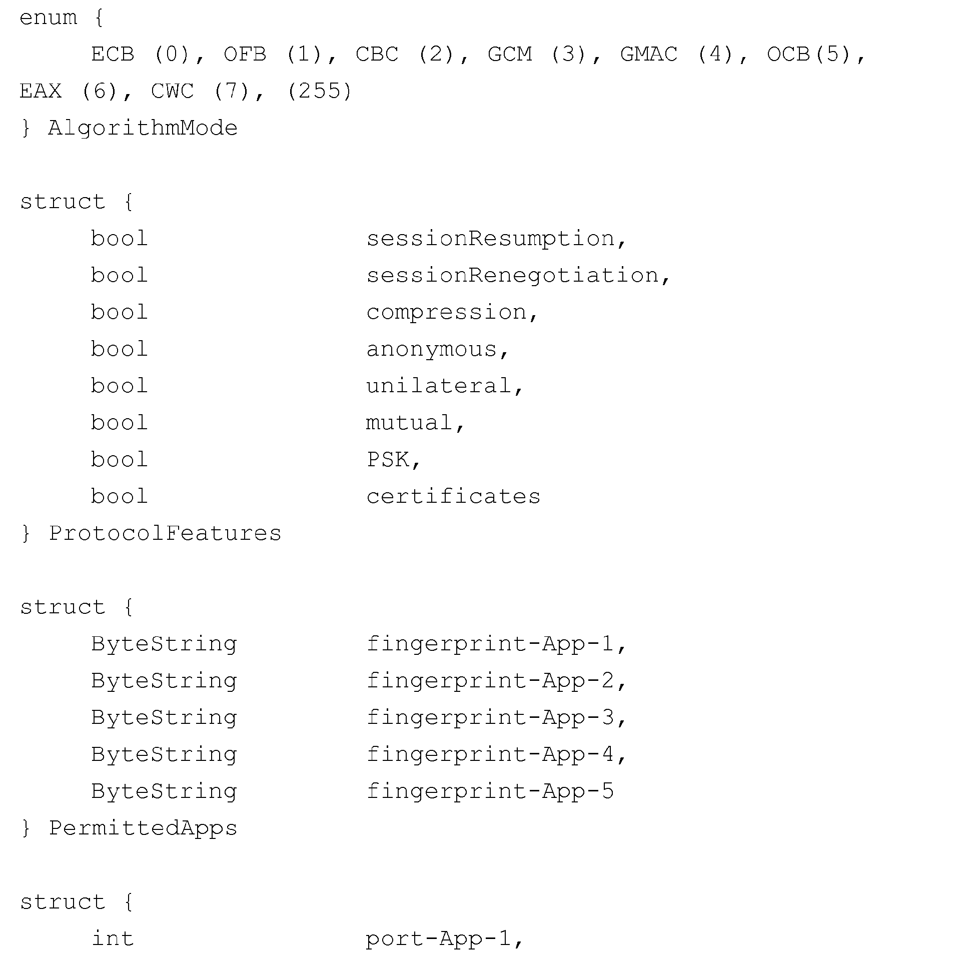

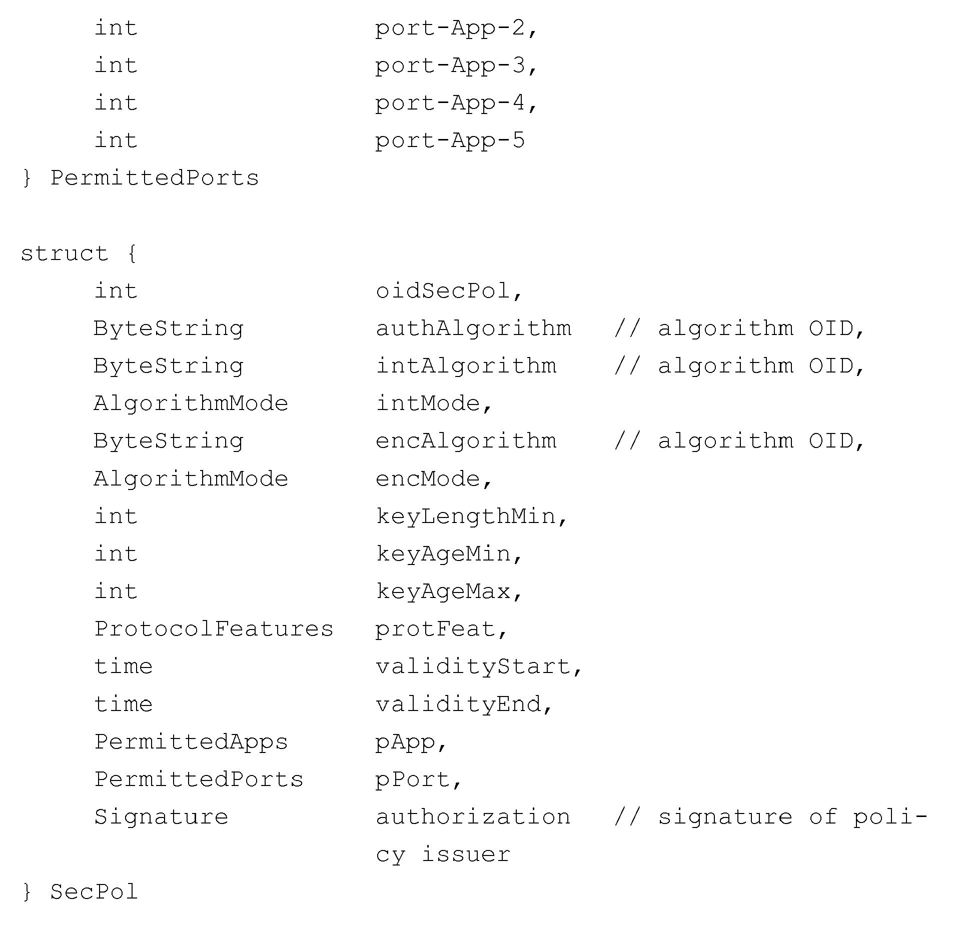

Ferner werden die Nachrichtentypen des TLS-Handshake-Protokolls erweitert, um Sicherheitsdaten übertragen zu können. Hierzu werden die Nachrichtentypen des TLS-Handshake-Protokolls um eine Nachrichtentyp "session_policy" wie folgt erweitert:

```
 enum {
     hello_request(0), client_hello(1), server_hello(2),
     certificate(11), server_key_exchange (12),
     certificate_request(13), server_hello_done(14),
     certificate_verify(15), client_key_exchange(16),
     finished(20), session_policy (21), (255)
 } HandshakeType;
 struct {
     HandshakeType msg_type; /* handshake type */
     uint24 length; /* bytes in message */
     select (HandshakeType) {
            case hello_request: HelloRequest;
            case client_hello: ClientHello;
            case server_hello: ServerHello;
            case certificate: Certificate;
            case server_key_exchange: ServerKeyExchange;
            case certificate_request: CertificateRequest;
            case server_hello_done: ServerHelloDone;
            case certificate_verify: CertificateVerify;
            case client_key_exchange: ClientKeyExchange;
            case finished: Finished;
            case session_policy: SecPol;
     } body;
 } Handshake;
```

Die beschriebene Erweiterung ermöglich ein Übermitteln der Sicherheitsdaten als Token im Rahmen des TLS-Handshakes zwischen dem Client 1 und dem Server 2.

Optional prüft der Server 2 die digitale Signatur der empfangenen Sicherheitsdaten. Falls sie gültig ist, werden die in den Sicherheitsdaten enthaltenen Protokollfestlegungsdaten verwendet, um in einem Schritt S4 das sichere Protokoll 4 festzulegen. Das sichere Protokoll 4 wird derart durch den Server 2 bestimmt, dass es den Voraussetzungen der empfangenen Protokollfestlegungsdaten entspricht. Das sichere Protokoll 4 ist somit gemäß den Protokollfestlegungsdaten ein TLS1.2-Protokoll.

In einem Schritt S5 wird der sichere Kommunikationskanal 3 zwischen dem Client 1 und dem Server 2 aufgebaut. Hierzu wird das sichere Protokoll 4 verwendet, welches den sicheren Kommunikationskanal 3 definiert. Über den sicheren Kommunikationskanal 3 können der Client 1 und der Server 2 Daten sicher austauschen.

Die Protokollfestlegungsdaten können während des TLS-Handshakes an den Server 2 übertragen werden, wodurch das sichere Protokoll 4, welches den sicheren Kommunikationskanal 3 definiert, dynamisch bestimmt werden kann.

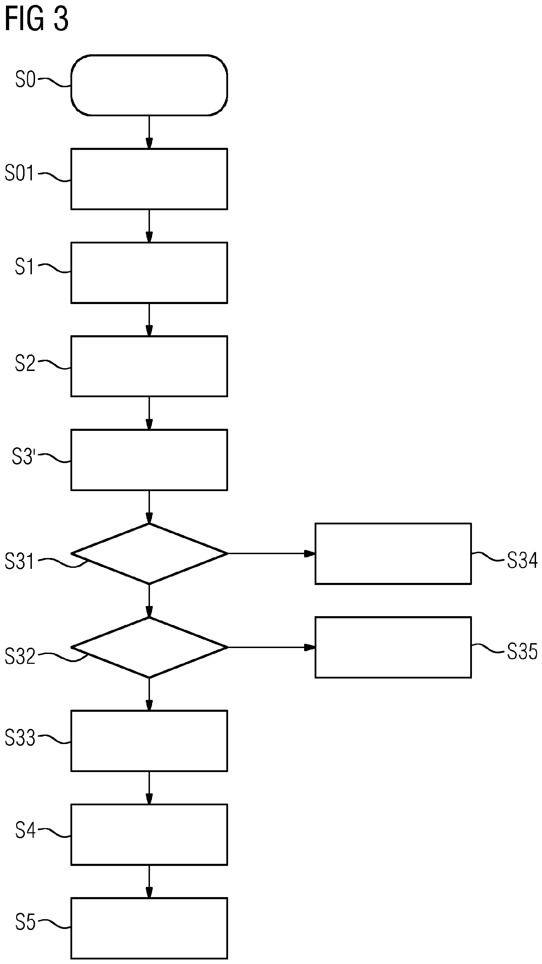

Die Fig. 3 zeigt ein Verfahren zum Aufbau eines sicheren Kommunikationskanals zwischen einer ersten und zweiten Netzwerkeinrichtung gemäß einer zweiten Ausführungsform. Das in der Fig. 3 dargestellte Verfahren ist eine Erweiterung für das Verfahren aus der Fig. 2. Das in der Fig. 1 dargestellte Netzwerk 10 kann das in der Fig. 3 dargestellte Verfahren durchführen.

Die Schritte S0, S1, S2, S4 und S5 sind identisch zu den mit Bezug auf die Fig. 2 beschrieben Schritte und werden deswegen nicht nochmal beschrieben.

In einem Schritt S01 wird eine Zulässigkeitsliste in dem Server 2 gespeichert. Die Zulässigkeitsliste wird über eine nicht dargestellte Schnittstelle des Servers 2 von einem Nutzer an den Server 2 übertragen und auf einer nicht dargestellten Festplatte des Server 2 gespeichert. Die Zulässigkeitsliste enthält die URLs von allen Ausstellereinrichtungen, die für den Server 2 zulässige Sicherheitsdaten erzeugen dürfen.

Beim Erzeugen der Sicherheitsdaten durch die Ausstellereinrichtung 5 in dem Schritt S1 wird den Sicherheitsdaten eine URL zugeordnet, die die Austellereinrichtung 5 als Austeller der Sicherheitsdaten angibt.

Die Sicherheitsdaten werden in dem Schritt S2 an den Client 1 übermittelt, und in einem Schritt S3' an den Server 2. Der Schritt S3' unterscheidet sich von dem zuvor beschriebenen Schritt S3 dadurch, dass die Übermittlung der Sicherheitsdaten nicht während eines TLS-Handshakes, sondern über ein zunächst vorläufiges Protokoll erfolgt.

Das zunächst vorläufige Protokoll ist ein HTTP-Protokoll, welches vorläufig zwischen dem Client 1 und dem Server 2 eingerichtet wurde, und mit den in den Sicherheitsdaten vorliegenden Protokollfestlegungsdaten verifiziert werden soll.

In einem Schritt S31 wird durch den Server 2 überprüft, ob die den Sicherheitsdaten zugeordnete Ausstellereinrichtung gemäß der Zulässigkeitsliste zulässige Sicherheitsdaten erstellen darf. Der Server 2 überprüft, ob die zugeordnete Ausstellereinrichtung in der Zulässigkeitsliste vorliegt oder nicht. Falls die zugeordnete Ausstellereinrichtung keine Sicherheitsdaten erstellen darf, wird in einem Schritt S34 der Aufbau des sicheren Kommunikationskanals unterbrochen. In dem Schritt S34 wird zudem ein Alarmsignal an einen Benutzer ausgegeben.

Falls die zugeordnete Ausstellereinrichtung die Sicherheitsdaten erstellen darf, wird in einem Schritt S32 überprüft, ob das zunächst vorläufige Protokoll den durch die Protokollfestlegungsdaten angegebenen Voraussetzungen für das sichere Protokoll entspricht. Es wird z.B. überprüft, ob das zunächst vorläufige Protokoll ein TLS1.2-Protokoll ist.

Wird den Voraussetzungen für das sichere Protokoll nicht entsprochen, wird in einem Schritt S35 die Kommunikation zwischen dem Client 1 und dem Server 2 über das zunächst vorläufige Protokoll unterbrochen.

Falls den Voraussetzungen für das sichere Protokoll entsprochen wird, wird das zunächst vorläufige Protokoll in einem Schritt S33 als das sichere Protokoll festgelegt, und der sichere Kommunikationskanal 3 wird gemäß dem sicheren Protokoll in dem Schritt S5 aufgebaut.

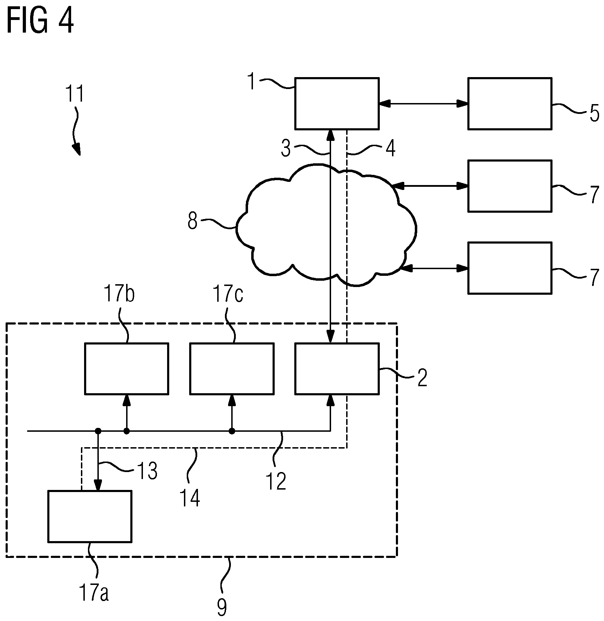

Die Fig. 4 zeigt ein zweites Beispiel eines Netzwerks 11. Das Netzwerk 11 unterscheidet sich von dem Netzwerk 10 aus dem ersten Beispiel dadurch, dass der Client 1 über das Internet 8 mit dem Server 2 verbunden ist. Auch mit dem Internet 8 verbunden sind ferner zwei Feldgeräte 7. Der Server 2 ist Teil einer Anlage 9, welche hier eine Industrieanlage ist. Der Server 2 ist über einen Bus 12 mit weiteren Feldgeräten 17a - 17c der Industrieanlage 9 verbunden.

Der Datenaustausch zwischen dem Client 1 und dem Server 2 erfolgt über den sicheren Kommunikationskanal 3, der wie bereits beschrieben durch das sichere Protokoll 4 definiert ist. Zum Aufbau der sicheren Kommunikationskanal 3 wird das bereits beschriebene Verfahren aus den Fig. 2 oder 3 durchgeführt.

Das Verfahren aus den Fig. 2 oder 3 kann auch zum Aufbau von weiteren sicheren Kommunikationskanälen 13 zwischen dem Server 2 und den jeweiligen weiteren Feldgeräten 17a - 17c durchgeführt werden. Der Server 2 ist hierbei die erste Netzwerkeinrichtung und die jeweiligen Feldgeräte 17a - 17c sind die zweiten Netzwerkeinrichtungen.

Im Folgenden wird beschrieben, wie das Verfahren aus der Fig. 2 zum Aufbau eines weiteren Kommunikationskanals 13 zwischen dem Server 2 und dem Feldgerät 17a durchgeführt wird. Der Aufbau von weiteren Kommunikationskanälen zwischen dem Server 2 und den Feldgeräten 17b und 17c ist identisch.

In dem Schritt S1 werden die weiteren Sicherheitsdaten durch die Ausstellereinrichtung 5 erzeugt. Die weiteren Sicherheitsdaten legen mit weiteren Protokollfestlegungsdaten ein weiteres sicheres Protokoll 14 zwischen dem Server 2 und dem weiteren Feldgerät 17a fest.

In dem Schritt S2 empfängt der Server 2, z.B. über den sicheren Kommunikationskanal 3, die weiteren Sicherheitsdaten für das weitere Feldgeräte 17a.

In dem Schritt S3 übermittelt der Server 2 die weiteren Sicherheitsdaten an das weitere Feldgerät 17a, welches in dem Schritt S4 anhand der in den weiteren Sicherheitsdaten enthaltenen weiteren Protokollfestlegungsdaten das weitere sichere Protokoll festlegt 14. In dem Schritt S5 wird der weitere sichere Kommunikationskanal 13 zwischen dem Server 2 und dem weiteren Feldgerät 17a aufgebaut, über welchen sichere Daten zwischen dem Server 2 und dem weiteren Feldgerät 17a ausgetauscht werden können.

Obwohl die vorliegende Erfindung anhand von Ausführungsbeispielen beschrieben wurde, ist sie vielfältig modifizierbar. Beispielsweise können die erste und zweite Netzwerkeinrichtung auch andere Einrichtungen, wie Feldgeräte, Roboterteile, Schutzrelais oder dergleichen sein. Die Protokollfestlegungsdaten können auch z.B. eine Laufzeit für den sicheren Kommunikationskanal und/oder Kommunikationspartnerdaten enthalten. Die Sicherheitsdaten können auch kryptographisch verschlüsselt übermittelt werden oder beliebig gegen Manipulationen geschützt werden. Das sichere Protokoll ist nur beispielsweise ein TLS-Protokoll und kann alternativ auch ein IPsec-Protokoll sein.

## Patentansprüche

1. Verfahren zum Aufbau eines sicheren Kommunikationskanals (3) zum Austausch von Daten zwischen einer ersten und zweiten Netzwerkeinrichtung (1, 2) über ein sicheres Protokoll (4), wobei die zweite Netzwerkeinrichtung (2) eingerichtet ist, das sichere Protokoll (4) in Abhängigkeit von Protokollfestlegungsdaten festzulegen, die Voraussetzungen für das sichere Protokoll (4) angeben, umfassend:
Erzeugen (S1) von Sicherheitsdaten durch eine Ausstellereinrichtung (5), wobei die Sicherheitsdaten die Protokollfestlegungsdaten definieren;
Signieren der Sicherheitsdaten mit einer digitalen Signatur oder einem Nachrichtenauthentisierungscode durch die Ausstellereinrichtung (5);
Übermitteln (S2) der Sicherheitsdaten an die erste Netzwerkeinrichtung (1) von der Ausstellereinrichtung (5);
Übermitteln (S3) der Sicherheitsdaten an die zweite Netzwerkeinrichtung (2) von der ersten Netzwerkeinrichtung (1);
Verifizieren der Authentizität der Sicherheitsdaten durch die zweite Netzwerkeinrichtung (2) durch Prüfen der digitalen Signatur oder des Nachrichtenauthentisierungscodes; und
Aktualisieren von veralteten Protokollfestlegungsdaten der zweiten Netzwerkeinrichtung (2) anhand der durch die empfangenen Sicherheitsdaten definierten Protokollfestlegungsdaten.

2. Verfahren nach Anspruch 1, welches ferner umfasst:
Festlegen (S4) des sicheren Protokolls (4) unter Verwendung der mit den Sicherheitsdaten an die zweite Netzwerkeinrichtung (2) übermittelten Protokollfestlegungsdaten; und
Aufbauen (S5) des sicheren Kommunikationskanals (3) über das festgelegte sichere Protokoll (4).

3. Verfahren nach Anspruch 1 oder 2, wobei die Sicherheitsdaten in einem kryptographischen Authentisierungsprotokoll, insbesondere in einem TLS-Handshake-Protokoll, an die zweite Netzwerkeinrichtung (2) übermittelt werden.

4. Verfahren nach einem der Ansprüche 1 bis 3, wobei das sichere Protokoll (4) ein TLS-Protokoll, ein DTLS Protokoll, ein SSH Protokoll, ein QUIC-Protokoll, ein IPsec-Protokoll, ein HTTP-Protokoll, ein Bluetooth-Protokoll, ein WLAN-Protokoll, ein ZigBee-Protokoll, ein IKE-Protokoll oder ein MACsec-Protokoll ist.

5. Verfahren nach einem der Ansprüche 1 bis 4, wobei die Sicherheitsdaten über ein zunächst vorläufiges Protokoll von der ersten Netzwerkeinrichtung (1) an die zweite Netzwerkeinrichtung (2) übermittelt werden; wobei das Verfahren ferner umfasst:
Überprüfen (S32), ob das zunächst vorläufige Protokoll den durch die Protokollfestlegungsdaten angegebenen Voraussetzungen für das sichere Protokoll (4) entspricht; und
Festlegen (S33) des zunächst vorläufigen Protokolls als das sichere Protokoll (4), falls bestimmt wird, dass das zunächst vorläufige Protokoll den Voraussetzungen für das sichere Protokoll (4) entspricht.

6. Verfahren nach einem der Ansprüche 1 bis 5, wobei die Sicherheitsdaten als ASN.1-Datenstruktur, als XML-Datenstruktur, als JSON-Datenstruktur oder als JSON Web Token codiert sind.

7. Verfahren nach einem der Ansprüche 1 bis 6, wobei die Sicherheitsdaten nur durch die zweite Netzwerkeinrichtung (2) entschlüsselbar sind.

8. Verfahren nach einem der Ansprüche 1 bis 7, wobei den Sicherheitsdaten eine Austellereinrichtung (5) zugeordnet ist, die die Sicherheitsdaten erzeugt hat.

9. Verfahren nach Anspruch 8, ferner umfassend:
Speichern (S01) einer Zulässigkeitsliste in der zweiten Netzwerkeinrichtung (2), die angibt, welche Ausstellereinrichtungen (5) aus einer Vielzahl von Ausstellereinrichtungen zum Aufbau des sicheren Kommunikationskanals (3) zulässige Sicherheitsdaten erstellen dürfen;
Überprüfen (S31), in der zweiten Netzwerkeinrichtung (2), ob die den Sicherheitsdaten zugeordnete Ausstellereinrichtung (5) gemäß der Zulässigkeitsliste zulässige Sicherheitsdaten erstellen darf; und
Festlegen (S4) des sicheren Protokolls unter Verwendung der mit den Sicherheitsdaten übermittelten Protokollfestlegungsdaten, falls bestimmt wird, dass die den Sicherheitsdaten zugeordnete Ausstellereinrichtung (5) gemäß der Zulässigkeitsliste zulässige Sicherheitsdaten erstellen darf.

10. Verfahren nach einem der Ansprüche 1 bis 9, wobei die Sicherheitsdaten die Protokollfestlegungsdaten enthalten, und/oder wobei die Sicherheitsdaten eine Adresse enthalten, die einen Speicherort der Protokollfestlegungsdaten angibt.

11. Verfahren nach einem der Ansprüche 1 bis 10, wobei die Protokollfestlegungsdaten zumindest enthalten:
Protokollidentifizierungsdaten zum Identifizieren des sicheren Protokolls (4);
Schlüsseldaten zum Bestimmten eines für den sicheren Kommunikationskanal (3) auszuhandelnden Schlüssels;
Absicherungsdaten zum Bestimmen einer Absicherung für den sicheren Kommunikationskanal (3);
Laufzeitdaten zur Angabe einer Laufzeit, während der der sichere Kommunikationskanal (3) zum Austausch von Daten zwischen der ersten und zweiten Netzwerkeinrichtung (1, 2) verwendbar ist;
Protokolldaten zum Definieren von Protokolleigenschaften des sicheren Protokolls (3); und/oder
Kommunikationspartnerdaten zum Bestimmen von Voraussetzungen für die erste und/oder zweite Netzwerkeinrichtung (1, 2) .

12. Verfahren nach einem der Ansprüche 1 bis 11, wobei den Sicherheitsdaten zumindest ein absoluter Zeitraum, für den die Sicherheitsdaten gültig sind, und/oder eine Anzahl an Kommunikationskanälen, für die die Sicherheitsdaten gültig sind, zugeordnet sind.

## Claims

1. Method for setting up a secure communication channel (3) for interchanging data between a first and a second network device (1, 2) by using a secure protocol (4), wherein the second network device (2) is configured to stipulate the secure protocol (4) on the basis of protocol stipulation data indicating prerequisites for the secure protocol (4), comprising:
producing (S1) security data by means of an issuer device (5), wherein the security data define the protocol stipulation data;
signing the security data with a digital signature or a message authentication code by means of the issuer device (5);
transmitting (S2) the security data to the first network device (1) from the issuer device (5);
transmitting (S3) the security data to the second network device (2) from the first network device (1);
verifying the authenticity of the security data by means of the second network device (2) by checking the digital signature or the message authentication code; and
updating obsolete protocol stipulation data of the second network device (2) on the basis of the protocol stipulation data defined by the received security data.

2. Method according to Claim 1, further comprising:
stipulating (S4) the secure protocol (4) by using the protocol stipulation data transmitted with the security data to the second network device (2); and
setting up (S5) the secure communication channel (3) by using the stipulated secure protocol (4).

3. Method according to Claim 1 or 2, wherein the security data are transmitted to the second network device (2) in a cryptographic authentication protocol, in particular in a TLS Handshake protocol.

4. Method according to one of Claims 1 to 3, wherein the secure protocol (4) is a TLS protocol, a DTLS protocol, an SSH protocol, a QUIC protocol, an IPsec protocol, an HTTP protocol, a Bluetooth protocol, a WLAN protocol, a ZigBee protocol, an IKE protocol or an MACsec protocol.

5. Method according to one of Claims 1 to 4, wherein the security data are transmitted from the first network device (1) to the second network device (2) by using an initially provisional protocol; wherein the method further comprises:
checking (S32) whether the initially provisional protocol satisfies the prerequisites for the secure protocol (4) that are indicated by the protocol stipulation data; and
stipulating (S33) the initially provisional protocol as the secure protocol (4) if it is determined that the initially provisional protocol satisfies the prerequisites for the secure protocol (4).

6. Method according to one of Claims 1 to 5, wherein the security data are coded as an ASN.1 data structure, as an XML data structure, as a JSON data structure or as a JSON Web Token.

7. Method according to one of Claims 1 to 6, wherein the security data are decryptable only by the second network device (2) .

8. Method according to one of Claims 1 to 7, wherein the security data have an associated issuer device (5) that has produced the security data.

9. Method according to Claim 8, further comprising:
storing (S01) an admissibility list in the second network device (2), indicating which issuer devices (5) from a multiplicity of issuer devices are permitted to produce admissible security data for setting up the secure communication channel (3);
checking (S31), in the second network device (2), whether the issuer device (5) associated with the security data is permitted to produce admissible security data in accordance with the admissibility list; and
stipulating (S4) the secure protocol by using the protocol stipulation data transmitted with the security data if it is determined that the issuer device (5) associated with the security data is permitted to produce admissible security data in accordance with the admissibility list.

10. Method according to one of Claims 1 to 9, wherein the security data contain the protocol stipulation data, and/or wherein the security data contain an address indicating a memory location of the protocol stipulation data.

11. Method according to one of Claims 1 to 10, wherein the protocol stipulation data contain at least:
protocol identification data for identifying the secure protocol (4);
key data for determining a key to be negotiated for the secure communication channel (3);
protection data for determining a protection for the secure communication channel (3);
execution time data for indicating an execution time during which the secure communication channel (3) is usable for interchanging data between the first and second network devices (1, 2);
protocol data for defining protocol properties of the secure protocol (3); and/or
communication partner data for determining prerequisites for the first and/or second network device (1, 2).

12. Method according to one of Claims 1 to 11, wherein the security data have at least an associated absolute period for which the security data are valid and/or an associated number of communication channels for which the security data are valid.

## Revendications

1. Procédé d'établissement d'un canal (3) de communication sécurisé pour l'échange de données entre un premier et un deuxième dispositif (1, 2) de réseau par un protocole (4) sécurisé, le deuxième dispositif (2) de réseau étant agencé pour fixer le protocole (4) sécurisé en fonction de données de fixation de protocole, qui indiquent des conditions préalables pour le protocole (4) sécurisé, comprenant :
la production (S1) de données de sécurité par un dispositif (5) d'établissement, les données de sécurité définissant les données de fixation du protocole ;
la signature des données de sécurité avec une signature numérique ou un code d'authentification de message par le dispositif (5) d'établissement ;
la transmission (S2) des données de sécurité au premier dispositif (1) de réseau par le dispositif (5) d'établissement ;
- la transmission (S3) des données de sécurité au deuxième dispositif (2) de réseau par le premier dispositif (1) de réseau ;
la vérification de l'authenticité des données de sécurité par le deuxième dispositif (2) de réseau, par contrôle de la signature numérique ou du code d'authentification de message ; et
la mise à jour de données de fixation de protocole périmées du deuxième dispositif (2) de réseau, à l'aide des données de fixation de protocole définies par les données de sécurité reçues.

2. Procédé suivant la revendication 1, qui comprend, en outre :
la fixation (S4) du protocole (4) sécurisé, en utilisant les données de fixation de protocole transmises avec les données de sécurité au deuxième dispositif (2) de réseau ; et
l'établissement (S5) du canal (3) de communication sécurisé par le protocole (4) sécurisé fixé.

3. Procédé suivant la revendication 1 ou 2, dans lequel on transmet, au deuxième dispositif (2) de réseau, les données de sécurité dans un protocole d'authentification cryptographique, notamment dans un protocole TLS-handshake.

4. Procédé suivant l'une des revendications 1 à 3, dans lequel le protocole (4) sécurisé est un protocole TLS, un protocole DTLS, un protocole SSH, un protocole QUIC, un protocole IPsec, un protocole HTTP, un protocole Bluetooth , un protocole WLAN, un protocole Zigbee, un protocole IKE ou un protocole MACsec.

5. Procédé suivant l'une des revendications 1 à 4, dans lequel on transmet les données de sécurité du premier dispositif (1) de réseau au deuxième dispositif (2) de réseau, par un protocole d'abord provisoire, le procédé comprenant, en outre :
le contrôle (S32) du point de savoir si le protocole d'abord provisoire correspond aux conditions préalables indiquées par les données de fixation du protocole pour le protocole (4) sécurisé ; et
la fixation (S33) du protocole d'abord provisoire, comme protocole (4) sécurisé, s'il est déterminé que le protocole d'abord provisoire correspond aux conditions préalables pour le protocole (4) sécurisé.

6. Procédé suivant l'une des revendications 1 à 5, dans lequel les données de sécurité sont codées sous la forme d'une structure de données ASN.1, d'une structure de données XML, d'une structure de données JSON ou d'un jeton de toile JSON.

7. Procédé suivant l'une des revendications 1 à 6, dans lequel les données de sécurité ne peuvent être déchiffrées que par le deuxième dispositif (2) de réseau.

8. Procédé suivant l'une des revendications 1 à 7, dans lequel il est associé aux données de sécurité un dispositif (5) d'établissement, qui a produit les données de sécurité.

9. Procédé suivant la revendication 8, comprenant, en outre :
la mise en mémoire (S01) d'une liste d'admissibilité dans le deuxième dispositif (2) de réseau, qui indique les dispositifs (5) d'établissement, parmi une pluralité de dispositifs d'établissement, qui peuvent produire des données de sécurité admissibles pour l'établissement du canal (3) de communication sécurisé ;
le contrôle (S31), dans le deuxième dispositif (2) de réseau, du point de savoir si les dispositifs (5) d'établissement associés aux données de sécurité peuvent produire des données de sécurité admissibles suivant la liste d'admissibilité ; et
la fixation (S4) du protocole sécurisé, en utilisant les données de fixation de protocole transmises avec les données de sécurité, s'il est déterminé que le dispositif (5) d'établissement associé aux données de sécurité peut produire des données de sécurité admissibles suivant la liste d'admissibilité.

10. Procédé suivant l'une des revendications 1 à 9, dans lequel les données de sécurité contiennent les données de fixation du protocole et/ou dans lequel les données de sécurité contiennent une adresse, qui indique un emplacement de mise en mémoire des données de fixation du protocole.

11. Procédé suivant l'une des revendications 1 à 10, dans lequel les données de fixation du protocole contiennent au moins :
des données d'identification du protocole, pour identifier le protocole (4) sécurisé ;
des données de chiffrement, pour déterminer une clé de traitement pour le canal (3) de communication sécurisé ;
des données de sécurisation, pour déterminer une sécurisation pour le canal (3) de communication sécurisé ;
des données de temps de parcours, pour l'indication d'un temps de parcours pendant lequel le canal (3) de communication sécurisé peut être utilisé pour l'échange de données entre le premier et le deuxième dispositifs (1, 2) de réseau ;
des données de protocole, pour définir des propriétés du protocole (3) sécurisé ; et/ou
des données de partenaire de communication, pour déterminer des conditions préalables pour le premier et/ou le deuxième dispositif (1, 2) de réseau.

12. Procédé suivant l'une des revendications 1 à 11, dans lequel, aux données de sécurité, sont ajoutés au moins un laps de temps absolu, pendant lequel les données de sécurité sont valables et/ou un nombre de canaux de communication, pour lesquels les données de sécurité sont valables.
